# EUROPÄISCHE PATENTSCHRIFT

(11) **EP 0 718 539 B1**
(45) Veröffentlichungstag und Bekanntmachung des Hinweises auf die Patenterteilung: **29.11.2000**
(21) Anmeldenummer: 95119937.1
(22) Anmeldetag: 18.12.1995
(51) Int. Cl.: F16L 55/02, F16L 55/033

(54) **Gasführungselement mit schallweichen Wänden zum Dämmen und Dämpfen von sich in Hauptkanälen ausbreitenden Geräuschen**
Gas conveying element with soft walls to insulate from and attenuate noises propagating in main channels
Elément convoyant un gaz ayant des parois molles pour isoler et atténuer les sons se propageant dans un conduit principal

(30) Priorität: 21.12.1994 DE 4445794
(43) Veröffentlichungstag der Anmeldung: 26.06.1996
(73) Patentinhaber: Norres, Richard, 45896 Gelsenkirchen (DE); Norres, Albert, 45896 Gelsenkirchen (DE)
(72) Erfinder: Norres, Richard, 45896 Gelsenkirchen (DE); Norres, Albert, 45896 Gelsenkirchen (DE)
(74) Vertreter: Eichelbaum, Lambert, Dipl.-Ing.

(56) Entgegenhaltungen:
- EP-A- 0 196 812
- EP-A- 0 638 755
- DE-A- 3 720 231
- DE-B- 1 131 463
- FR-A- 2 257 850

## Beschreibung

Die Erfindung betrifft ein Gasführungselement mit schallweichen Wänden zum Dämmen und Dämpfen von sich in Hauptkanälen ausbreitenden Geräuschen, welches aus einer flexiblen Innenschlauchhülle mit einem Metallelement, einer Außenschlauchhülle und einer zwischen den Schlauchhüllen angeordneten, weichen sowie gleichfalls flexiblen Materialeinlage zusammengesetzt ist.

Bei einem bekannten Gasführungselement dieser Art gemäß der DE-OS 27 49 665 besteht die Innenschlauchhülle aus einem weitmaschigen Gewebe welches an ihrer Innenseite zur Verstärkung mit einem Spiraldraht als Metallelement versehen ist. Die Außenschlauchhülle wird von einer Folie gebildet, wobei zwischen dieser Folie und dem Gewebe ein Schaumstoff als Materialeinlage eingebracht ist. Die kreisringförmigen Endbereiche dieses flexiblen sowie geradlinig ausgebildeten Gasführungselementes werden von aufgeklebten Endkappen verschlossen. Nach den Vorstellungen des Erfinders dieses Gasführungselementes soll der Schall durch die Maschen des Gewebes der Innenschlauchhülle in die aus einem Schaumstoffkörper bestehende Materialeinlage eindringen und dort gedämpft werden. Derartige Gasführungselemente sind aufgrund des Schaumstoffkörpers weder temperaturbeständig noch abriebfest und aus diesem Grunde zur Schalldämmung und -dämpfung nur bedingt geeignet. Zum Dämmen und Dämpfen von Schallemissionen von hoher Schallintensität in heißen Gasen aus Gasturbinen kommen derartige Gasführungselemente nicht in Betracht.

Bei einem weiteren Gasführungselement gemäß der DE 38 30 346 C2 wird die Innenschlauchhülle von einem flexiblen, gewellten sowie perforierten Grundelement gebildet, auf dessen Außenseite als Schallschluckmaterial ein offenporiger Schaum aus polymerem Material aufgebracht ist, der an seiner Außenumfangsfläche von einer kompakten Haut als Außenschlauchhülle umgriffen ist. Auch dieses Gasführungselement kommt zur Führung von heißen Gasen und zur Dämpfung von damit verbundenen Schallintensitäten nicht in Betracht, wie sie bei Gasturbinen auftreten. Auch lassen die in dieser Vorveröffentlichung genannten relativen Senkungen der Schalldruckpegel den Schluß auf eine nur bescheidene Schalldämmung zu, obgleich in absoluter Betrachtung eine Senkung des Schalldruckpegels um 3 dB(A) bereits eine Reduzierung der Schallintensität um die Hälfte bedeutet.

Ferner ist aus der DE 32 20 023 C3 und der gleichlautenden EP 0 095 582 ein Gasführungselement bekannt geworden, dessen Außenschicht aus einem überwiegend geschlossenzelligen, elastischen, termoplastischen Schaumstoff besteht, wohingegen dessen Innenschicht, die überwiegend die Aufgabe der Schallabsorption übernehmen soll, aus einem offenzelligen Weichschaumstoff, beispielweise aus einem Polyurethanweichschaum, gebildet ist. Die beiden Schichten sind entweder durch Flammkaschierung oder durch einen Haftvermittler verbunden. Zwischen den Schichten ist auch eine Materialeinlage in Form einer Verstärkungsschicht, beispielsweise ein Gelege, Gewebe oder Gewirke aus Textil und/oder Glasfasern in Betracht gezogen. Auch dieses Gasführungselement kommt als Schalldämpfer für heiße Gase aufgrund seiner Materialzusammensetzungen nicht in Betracht.

Bei zu wartenden Gasturbinen oder Air-driver-pumps an Großraumflugzeugen, beispielsweise bei denen der Boeing-Maschinen des Types 747, muß mit einer Schallintensität am Ausgang der Turbine von 150 dB(A) und einer Gastemperatur von ca. 200 °C und an den Hauptturbinen mit einer Schallintensität von 165 dB(A) und einer Kernstrahltemperatur von 820 °C gerechnet werden, wobei eine derartige Schallintensität für einen Menschen Lebensgefahr bedeutet. Zur Schallintensitätsherabsetzung in diesem Bereich sagen auch die Kurven dieser Vorveröffentlichung wenig aus.

Und schließlich ist aus der US-PS 3 374 856 ein Gasführungselement anderer Gattung bekanntgeworden, welches sich aus einer gewellten Außenschlauchhülle aus gummi- oder kunststoffimprägnierten Gewebe besteht, während die Innenschlauchhülle aus einem synthetischen Kunststoff z. B. Urethangummi hergestellt ist. Eine Materialeinlage als Zwischenhülle fehlt. Die Figur 2 dieser Druckschrift zeigt eine Biegung eines derartigen Gasführungselementes um 180°, um deren Flexibiliät zu belegen. Eine Einbaulage in dieser gebogenen Form wird in dieser Vorveröffentlichung jedoch noch nicht einmal andeutungsweise erwähnt. Auch dieses Gasführungselement ist aufgrund seiner temperaturunbeständigen Materialien nicht zur Schalldämmung- oder Dämpfung von Schallintensitäten in heißen Gasen von Gasturbinen geeignet.

Neben diesen Gasführungselementen mit schallweichen Wänden, gibt es noch eine Reihe von Schalldämpfern mit schallharten Wänden, wie z. B. gemäß der US-PS 2 886 121, der US-PS 3 187 835, der US-PS 3 415 337, US-PS 3 227 240, der EP 0 346 551 Bl, der EP 0 493 161 A1 und der DE-OS 2 264 354, die nicht Gegenstand der vorliegenden Erfindung sind.

Von diesem Stand der Technik ausgehend, liegt der Erfindung die Aufgabe zugrunde, ein Gasführungselement mit schallweichen Wänden gemäß der eingangs genannten Gattung bei preiswerter Herstellung und leichter Handhabbarkeit derart auszubilden, daß es eine beträchtliche Schallintensitätsminderung von Geräuschen auch in heißen und chemisch aggressiven Gasen gewährleistet.

Diese Aufgabe wird in Verbindung mit dem eingangs genannten Gattungsbegriff dadurch gelöst, daß die Innenschlauchhülle je nach mechanischer, chemischer oder kalorischer Belastung durch das zu führende Gas aus einem Textil, aus Metalldraht-, Glasfaser-, Synthetik-, Natur- oder Keramikgewebe, Non-woven oder einer weichen, dünnen Folie aus Polyurethan oder Polyamid oder Polytetrafluorethylen oder einer Kombination dieser Materialien besteht, welche an ihrer Außenseite mit massebehafteten Metallelementen verbunden ist, daß die Materialeinlage aus einem Haufwerk von Mineralfasern und/oder Metallfasern und/oder Spänen und/oder von Chips aus entropieelastischen Materialien hergestellt ist und das Gasführungselement zwischen seinem Gaseinlaß und seinem Gasauslaß mindestens eine Windung von 360° aufweist.

Dabei können die Materialien vom Textil bis zum Non-woven unbeschichtet sein oder bei erwünschter Gas- und Luftdichtigkeit mit einem entropieelastischen Material, wie Naturkautschuk, Gummi oder einem Kunststoff, beschichtet oder mit einer dünnen Aluminiumbeschichtung von z.B. 25 µm bis 50 µm versehen werden.

Nach einer ersten Ausführungsform bestehen die massebehafteten Metallelemente aus Einzelringen, welche die Innenschlauchhülle umgreifen oder die aus Schlauchabschnitten bestehende Innenschlauchhülle zusammenhalten.

Nach einer zweiten Ausführungsform werden die massebehafteten Metallelemente von einer Metallspirale gebildet, welche die aus zwei spiralförmigen Materialbahnen bestehende Innenschlauchhülle an ihren sich überlappenden Seitenenden zusammenhält.

Nach einer dritten Ausführungsform bestehen die massebehafteten Metallelemente aus regelmäßig an der Außenseite der Innenschlauchhülle befestigten Metallstücken. Diese schweren Metallstücke können auch mit Beton oder sonstigen Schwerteilen, wie schwere Keramik oder metallhaltiger Kunststoff, verbunden sein.

Nach einer vierten Ausführungsform bestehen die massebehafteten Metallelemente aus einer die Innenschlauchhülle umgreifenden Metallspirale und aus einem diese wiederum umgreifenden sowie mit der gleichen Windungsform versehenen Rohr oder Schlauch, der mit der Metallspirale durch Klammern oder eingeklipste Bänder verbunden ist, wobei der Zwischenraum zwischen der Innenwandung des Rohres oder Schlauches und der Außenwandung der Innenschlauchhülle mit Wasser, Hochtemperaturöl oder einer schmelzenden Metallegierung gefüllt ist. Das entsprechend gewundene Rohr oder der Schlauch sollen einerseits die in Schwingung versetzte Masse erhöhen und andererseits über die Füllung des Zwischenraumes mit unterschiedlichen Medien zugleich auch Wärmemengen ab- oder zuführen, z.B. zum Kühlen oder auch zur Wärmerückgewinnung.

Der Begriff der "Windung" bei der erfindungsgemäßen Lösung umfaßt keinesweges nur eine "Kreiswindung". So kann die Windung einerseits von einer kreisförmigen, einer archimedischen, hyperbolischen oder einer logarithmischen Spirale gebildet sein oder andererseits von einer elliptischen oder ovalen Schleife bis hin zu einer Knotenwindung bestehen und schließlich auch die Form einer Schlangenlinie, insbesondere die Form einer sinusförmigen Schlangenlinie aufweisen. Allgemein sollen unter einer "Windung" im Sinne der Erfindung eine solche verstanden werden, die sich von einem geometischen Mittelpunkt aus bis zum Kreuzungsbereich ihrer Enden durch sämtliche vier Quadranten eines gedachten kartesischen Koordinatensystems erstreckt. Eine Ausnahme hiervon wird lediglich von der sich nur durch zwei Quadranten erstreckenden Schlangenlinie gebildet.

Vorteilhaft ist das Gasführungselement zwischen seinem Gaseinlaß und seinem Gasauslaß mit drei Windungen versehen.

Nach einer besonders vorteilhaften Weiterbildung der Erfindung ist jede Windung des Gasführungselementes in Abhängigkeit von der Flexibilität der Materialien der Schlauchhüllen mit einem möglichst engen Windungsradius versehen.

Erste Versuche mit einem derart aufgebauten Gasführungselement haben bei einer Schallintensität am Gaseinlaß von 150 dB(A) bei nur einer kreisförmigen Spiralwindung um 360° des Gasführungselementes eine Schallintensitätsminderung auf 108 dB(A) am Gasauslaß ergeben. Bei drei kreisförmigen Spiralwindungen des Gasführungselementes und bei einer Schallintensität von 150 dB(A) am Gaseinlaß wurden am Gasauslaß nur noch 89 dB(A) gemessen. Eine derartig überraschend starke Minderung der Schallintensität ist nach diesseitigen Feststellungen mit sämtlichen herkömmlichen und bekannten Gasführungselementen nicht möglich. Diese vorteilhafte Wirkung läßt sich nur durch den besonderen Aufbau des Gasführungselementes sowie durch ein Ausschwingen der schweren, massebehafteten Metallelemente, insbesondere der Metallringe bzw. der Metallspirale, in die flexible Materialeinlage erklären, wodurch in überraschender Weise hauptsächlich durch Absorption und wahrscheinlich weniger durch Reflexion und Interferenzerscheinungen die zuvor aufgezeigte Schallintensitäts-Minderung erreicht werden dürfte.

Nach einer vorteilhaften Weiterbildung der Erfindung ist auch die Außenschlauchhülle mit demselben Aufbau wie der der Innenschlauchhülle versehen, wobei die Materialeinlage gleichmäßig im Zwischenraum zwischen der Innenschlauch- und der Außenschlauchhülle verteilt ist.

Die Außenschlauchhülle besteht vorteilhaft aus einem gas- und luftdichten Kunststoff, wie Polytetraflouräthylen (PTFE), Polyamid (PA) aus Polyester (PETP) oder aus einem ein- oder beidseitig mit diesen Kunststoffen beschichteten Textil aus Draht- oder Glasfaser, Synthetik oder Naturgewebe, aus Non-woven, Keramik oder einer Werkstoffkombination dieser Materialien.

Nach einer besonders vorteilhaften Weiterbildung der Erfindung ist zwischen der Innen- und Außenschlauchhülle eine Mittelschlauchhülle eingezogen, die den gleichen Aufbau wie die Innenschlauchhülle aufweisen kann. Besonders vorteilhaft ist die Innenschlauchhülle aus einem Edelstahl-Drahtgewebe, die Mittel- und die Außenschlauchhülle aus einem glasfaserverstärkten Gewebe und die Materialeinlage zwischen der Innenschlauchhülle und der Mittelschlauchhülle aus Edelstahlwolle und die Materialeinlage zwischen der Mittelschlauchhülle und der Außenschlauchhülle aus Mineralfaserwolle hergestellt. Ein derartig ausgebildetes Gasführungselement ist besonders für die Schalldämmung und -dämpfung von heißen Gasen von 1150 °C und mehr geeignet.

Vorteilhaft sind die Schlauchhüllen in an sich bekannter Weise aus spiralförmigen Materialbahnen hergestellt, deren sich überlappende Seitenenden einen metallischen Stützkörper umhüllen und gemeinsam mit diesem von einem Klemmkörper mit C-förmigem Querschnitt umgriffen sind, dessen an seiner Öffnungsstelle gegenüberliegende Schenkelleisten die Materialbahnen und deren sich überlappende Seitenenden an dieser Stelle klemmen. Eine Schlauchhülle dieser Art ist in allen Einzelheiten und in mehreren Varianten in der DE 37 20 231 A1 beschrieben. Durch die Einfügung des metallischen Stützkörpers in den metallischen Klemmkörper mit C-förmigem Querschnitt wird nicht nur eine dauerhaft haltbare Verbindung zwischen den schallweichen Wänden und den Metallelementen geschaffen, sondern letztere auch mit einer erheblichen Masse behaftet, welche die Schalldämmung fördert.

Zu einer weiteren Schalldämmung und -dämpfung sowie zu einer Kühlung der Materialien ist es besonders vorteilhaft, wenn die Innenschlauchhülle in Weiterbildung der Erfindung mit einer Sprühvorrichtung zum Einsprühen von Wasser im Gasführungskanal versehen ist.

Zur Herabsetzung der Druckverluste wird die Querschnittsfläche des Gasführungskanals der Innenschlauchhülle - und demzufolge sämtlicher anderer sie umgreifenden Schlauchhüllen - gegenüber der Querschnittsfläche des Gasführungskanals vor dem Gaseinlaß vergrößert.

Mehrere Ausführungsbeispiele der Erfindung sind in den Zeichnungen dargestellt. Dabei zeigen:
- Fig. 1: die Seitenansicht eines erfindungsgemäßen Gasführungselementes mit nur einer Windung von 360°, welches mit seinem Gaseinlaß an den Gasaustritt einer Turbine angeflanscht ist,
- Fig. 2: die Ansicht eines Gasführungselementes mit drei Windungen auf einem Hubgerät, welches an seinem Gaseinlaß einen Trichter zur Aufnahme der mit Schallintensitäten behafteten Gase aus einer Turbine versehen ist,
- Fig. 3: die Ansicht eines Gasführungselementes in Form einer Schleife, welches an seinem Gaseinlaß an den Austritt einer Turbine angeflanscht ist,
- Fig. 4: die Ansicht eines Gasführungselementes in Form einer sinusförmigen Schlangenlinie mit zwei Windungen, welches mit seinem Gaseinlaß an eine Turbine angeschlossen und über seine gesamte Höhe in einem verfahrbaren Gestell angeordnet ist,
- Fig. 5: die Ansicht eines Gasführungselementes in Form einer Spirale mit einer Windung, welches mit seinem Gaseinlaß am Auslaß einer Turbine angeflanscht ist,
- Fig. 6: einen Teillängsquerschnitt durch ein Gasführungselement mit einer glatt ausgebildeten Außenhülle, einer Materialeinlage und einer Innenschlauchhülle, die aus zwei spiralförmigen Materialbahnen besteht, die von einem spiralförmigen Klemmkörper mit C-förmigem Querschnitt und einem metallischen Stützkörper zusammengehalten sind,
- Fig. 7: einen Teillängsquerschnitt durch eine weitere Ausführungsform eines Gasführungselementes mit prinzipiell gleichem Aufbau der Innen- und der Außenschlauchhülle mit dazwischen befindlicher Materialeinlage,
- Fig. 8: einen Teillängsquerschnitt durch eine weitere Ausführungsform mit einer zwischen Außenschlauchhülle und Innenschlauchhülle eingezogenen Mittelschlauchhülle und
- Fig. 9: die Querschnittsansicht einer Verbindung zwischen zwei spiralförmigen Materialbahnen mittels eines metallischen Stützkörpers und einer Metallspirale mit C-förmigem Querschnitt in vergrößerter Darstellung.

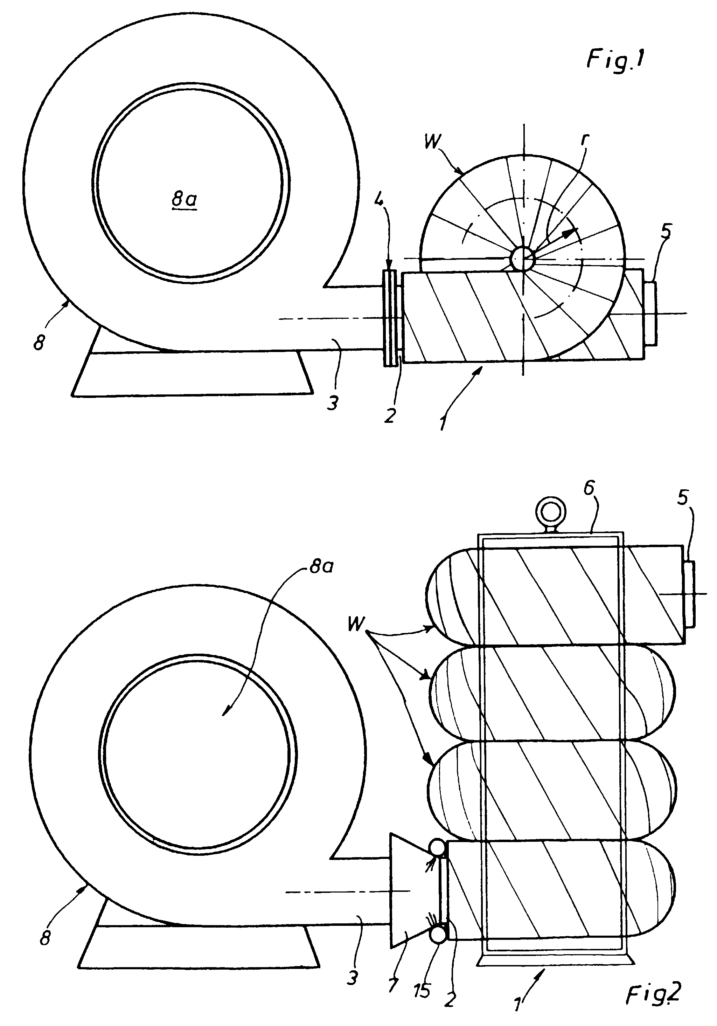

Gemäß Fig. 1 ist das erfindungsgemäße Gasführungselement 1 mit seinem Gaseinlaß 2 über eine Flanschverbindung 4 mit einem Hauptkanal 3 verbunden, während sein Gasauslaß 5 der Atmosphäre zugekehrt ist.

Das Gasfiihrungselement 1 ist gemäß Fig. 1 mit einer Windung W mit möglichst engem Windungsradius r versehen, wohingegen das Gasführungselement 1 gemäß Fig. 2 insgesamt drei Windungen W aufweist. In den Fig. 2 bis 5 sind mit Fig. 1 übereinstimmende Teile mit gleichen Bezugsziffern bezeichnet.

Das Gasführungselement 1 gemäß Fig. 2 ist in einem Traggestell 6 angeordnet und mit diesem von einem nicht dargestellten Hubgerät beliebig verfahrbar. Dieses Hubgerät kann sowohl ein Kran als auch ein Hubstapler sein. Sein Gaseinlaß 2 ist mit einem Trichter 7 versehen, in welchen der Hauptkanal 3 einer symbolisch dargestellten und mit der Bezugsziffer 8 bezeichneten Turbine einläuft. An die Stelle der Turbine 8 kann jedoch auch ein Lüfter oder eine sonstige schallemittierende Maschine treten.

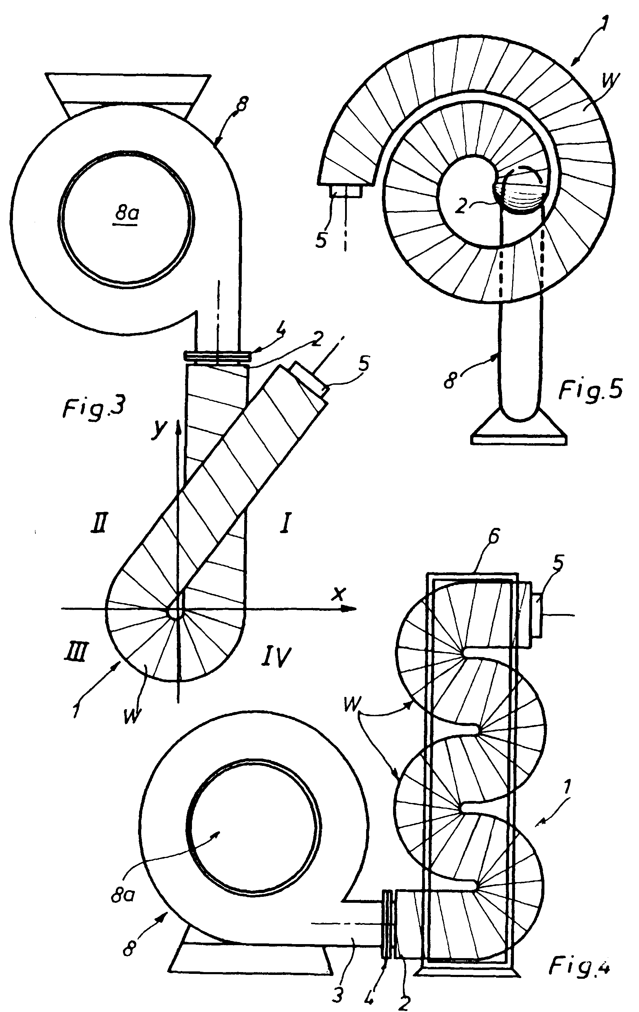

Gemäß Fig. 3 ist das Gasführungselement 1 in Form einer Schleife ausgebildet, die gleichfalls eine Windung W von 360° aufweist, weil sie sich durch alle vier Quadranten eines kartesischen Koordinatensystems erstreckt, welches mit der Abszissenachse x, der Ordinatenachse y und mit den römischen Zahlen I bis IV angedeutet ist. Aufgrund dieser Definition kann die Schleife gemäß Fig. 3 auch andere Formen aufweisen.

In Fig. 4 ist ein Gasführungselement 1 in Form von zwei sinusförmigen Schlangenlinien von je 360° dargestellt.

In Fig. 5 weist das Gasführungselement 1 die Form einer Spirale auf, welche eine archimedische, eine hyperbolische oder eine logarithmische Spirale sein kann.

Aus sämtlichen Ausführungsformen der Fig. 1 bis 5 wird evident, daß der Windungs- bzw. Krümmungsradius r der Windungen W möglichst eng bzw. klein geführt ist. Dabei konnte in Versuchen herausgefunden werden, daß die Minderung der Schallintensität um so größer ist, je geringer der Windungsradius r ist. Einem möglichst engen Windungsradius sind lediglich durch die Flexibilität der Materialien der Schlauchhüllen 9, 11, 14 Grenzen gesetzt.

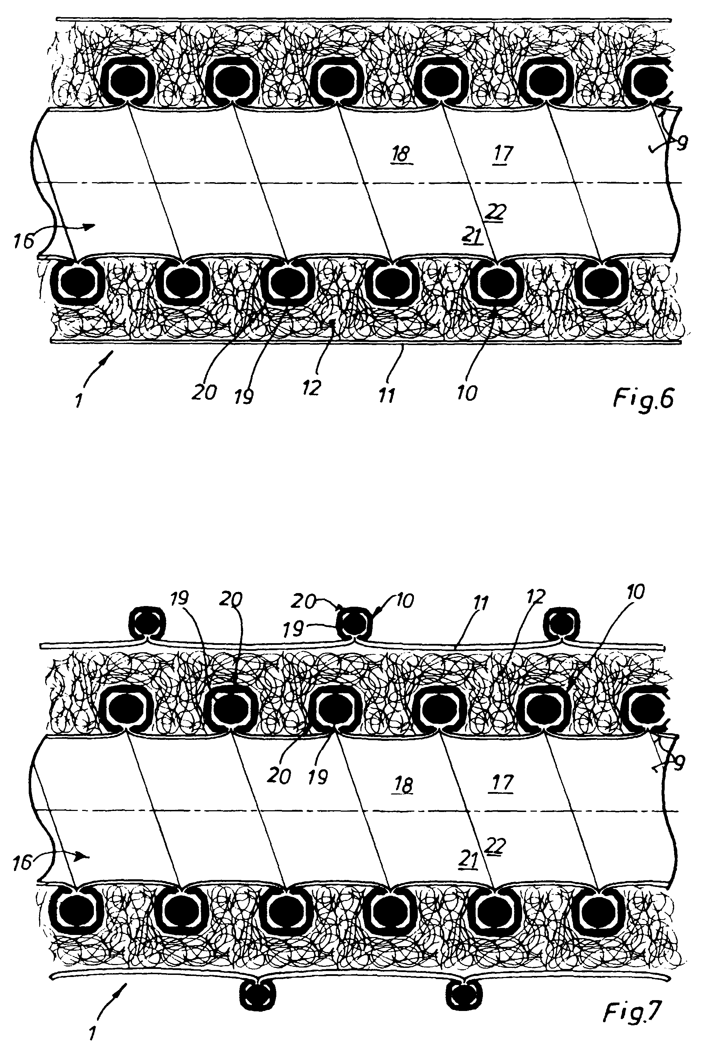

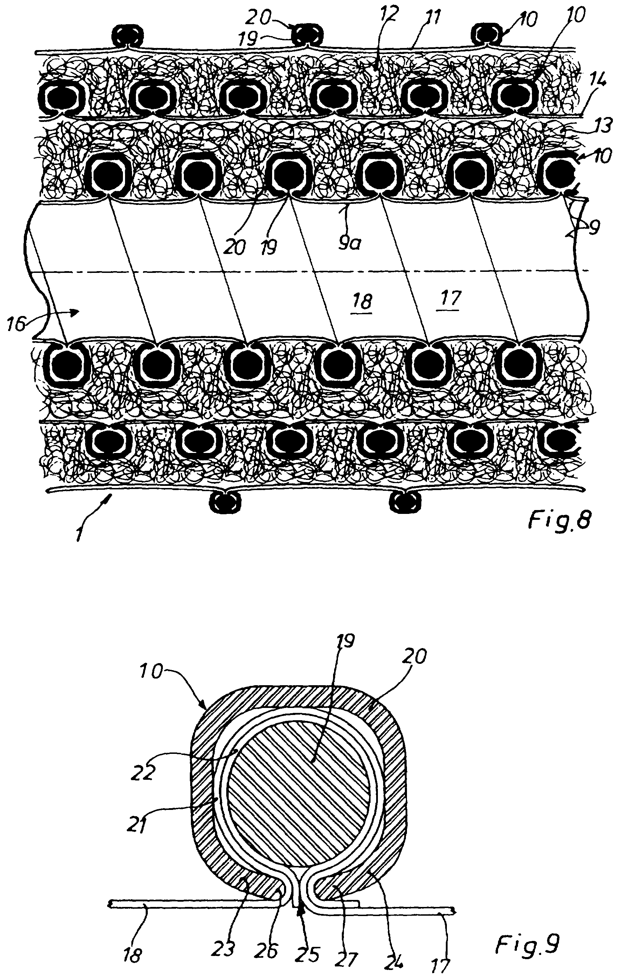

Gemäß den Fig. 6 bis 8 besteht die Innenschlauchhülle 9 je nach der Temperatur des zu führenden Gases aus einem Textil, aus Metalldraht-, Glasfaser-, Synthetik, Natur- oder Keramikgewebe, Non-woven oder einer weichen, dünnen Folie aus Polyurethan oder Polyamid oder einer Kombination dieser Materialien, welches entweder aus Einzelringen bestehend von Metallringen oder gemäß den Fig. 6 bis 8 aus Spiralbahnen bestehend von einer Spirale 10 als Metallelement zusammengehalten ist. Die Materialeinlage zwischen der Innenschlauchhülle 9 und der Außenschlauchhülle 11 wird von einem Haufwerk entweder aus Mineralfasern 12 gemäß den Fig. 6 und 7 oder gemäß Fig. 8 aus einem Haufwerk von Edelstahlwolle 13 gebildet.

Die Außenschlauchhülle 11 ist entweder gemäß Fig. 6 glatt ausgebildet oder gemäß Fig. 7 mit demselben Aufbau wie die Innenschlauchhülle 9 versehen. Die Außenschlauchhülle 11 kann aus einem gas- und luftdichten Kunststoff, wie Polytetrafluorethylen (PTFE), Polyamid (PA), Polyester (PETP) oder aus einem ein- oder beidseitig mit diesen Kunststoffen beschichteten oder unbeschichteten Textil aus Draht- oder Glasfaser, Synthetik, Natur- oder Keramikgewebe, aus Non-woven oder einer Werkstoff-Kombination dieser Materialien ausgebildet sein.

Das Ausführungsbeispiel gemäß Fig. 8 ist speziell zur Führung von heißen Gasen mit einer Temperatur von 1150° C und mehr sowie zur Dämmung und Dämpfung der sich darin ausbreitenden Geräusche bestimmt. In diesem Ausführungsbeispiel ist zwischen der Innenschlauchhülle 9 und der Außenschlauchhülle 11 eine Mittelschlauchhülle 14 eingezogen. Diese Mittelschlauchhülle 14 weist den gleichen Aufbau wie die Innenschlauchhülle 9 auf. In diesem Fall besteht die Innenschlauchhülle 9 aus einem feinen Edelstahl-Drahtgewebe, während die Mittelschlauchhülle 14 und die Außenschlauchhülle 11 aus einem glasfaserverstärkten Gewebe, hingegen die Materialeinlage zwischen der Mittelschlauchhülle 14 und der Außenschlauchhülle 11 von einem Haufwerk aus Mineralfasern 12 gebildet ist.

Es versteht sich, daß der prinzipielle Aufbau des erfindungsgemäßen Gasführungselementes gemäß den Fig. 1 bis 5 nur beispielhaft sein kann. Es sind sowohl Gasführungselemente mit weniger als drei Windungen als auch mit mehr als drei Windungen möglich. Die Wahl trifft der Fachmann nach dem Hauptverwendungszweck des Gasführungselementes. Wenn dieser Verwendungszweck hauptsächlich auf die Herabsetzung der am Gaseintritt 2 vorhandenen Schallintensität gerichtet ist, können auch ohne weiteres mehr als nur drei Windungen verwendet werden. Die Anzahl der Windungen wird jedoch so getroffen, daß durch den mit jeder Windung ansteigenden Druckverlust kein zu hoher Rückstau zur Turbine 8 bzw. einer anderen Arbeitsmaschine hin erfolgt. Aus diesem Grunde ist es vorteilhaft, die Querschnittsflächen des Gasführungskanals 16 der Innenschlauchhülle 9 gegenüber der Querschnittsfläche des Hauptkanals 3 vor dem Gaseinlaß 2 zu vergrößern, z.B. zu verdoppeln.

Zur weiteren Herabsetzung der Schallintensität kann die Innenschlauchhülle 9 mit einer Sprühvorrichtung 15 gemäß Fig. 2 versehen werden, um in den Führungskanal 16 des Gasführungselementes 1 Wasser einsprühen zu können, wodurch auch die Wärmebeanspruchung der Materialien herabgesetzt wird. Eine solche Sprühvorrichtung 15 ist in Fig. 2 als Ringsprühdüse am Gaseinlaß 2 vorgesehen, kann jedoch auch anders und an mehreren Stellen im Führungskanal 16 angeordnet werden.

Der prinzipielle Aufbau der Innenschlauchhülle 9, der Mittelschlauchhülle 14 gemäß Fig. 8 und der Außenschlauchhülle 11 gemäß den Fig. 7 und 8 ist in vergrößerter Darstellung in Fig. 9 abgebildet.

In diesem Fall bestehen die Schlauchhüllen 9, 11 und 14 aus zwei spiralförmigen Materialbahnen 17, 18, aus einem spiralförmigen Stützkörper 19 und auch einem spiralförmigen Klemmkörper 20 mit C-förmigem Querschnitt. Die sich überlappenden Seitenenden 21, 22 der spiralförmigen Materialbahnen 17, 18 umhüllen den Stützkörper 19. Die Schenkelleisten 23, 24 des Klemmkörpers 20 stehen sich an der Öffnungsstelle 25 gegenüber und klemmen an dieser Stelle die überlappenden Seitenenden 21, 22 der Materialbahnen 17, 18. Dabei sind die Kanten 26, 27 der Schenkelleisten 23, 24 abgerundet, um ein Einreißen der Materialbahnen 17, 18 an dieser Stelle zu verhindern. Der prinzipielle Aufbau der beiden Materialbahnen 17, 18 in Verbindung mit dem Stützkörper 19 und dem Klemmkörper 20 ist mit mehreren Varianten in allen Einzelheiten in der DE 37 20 231 A1 beschrieben und daher nicht Gegenstand der vorliegenden Erfindung.

Mit diesen Metallelementen 19, 20 ist durch Aufeinanderlegen mehrerer Materialbahn 17, 18 deren gleichzeitige Klemmung und daher die in Anspruch 1 beanspruchten Kombinationen dieser Materialien für die Innenschlauchhülle 9 möglich. Demzufolge kann die Innenschlauchhülle 9 alternativ gas- und luftdicht oder gas- und luftdurchlässig gestaltet werden.

Sowohl der Klemmkörper 20 als auch der Stützkörper 19 bestehen aus Metall und bilden eine schwingfähige Masse, welche in das Haufwerk aus Mineralfaserwolle 12 oder Edelstahlwolle 13 hineinschwingen und somit die Schallintensität entsprechend herabsetzen kann. Die überraschende Schallintensitäts-Minderung mit dem erfindungsgemäßen Gasführungselement scheint hauptsächlich in der Absorption der Schallintensität mittels der schwingenden Massen 19, 20 in Verbindung mit dem Haufwerk aus Mineralfaserwolle 12 und/oder aus Edelstahlwolle 13 zu bestehen. In Verbindung mit mindestens einer Windung W mit möglichst engem Windungsradius r wird der in den Führungskanal 16 eindringende Schall von der Innenwand 9a der Innenschlauchhülle 9 reflektiert, wodurch auch eine Schallherabsetzung durch entsprechende Interferenzerscheinungen möglich ist. Dabei spricht die in Versuchen erzielte Herabsetzung der Schallintensität von 150 dB(A) am Gaseinlaß 2 auf 89 dB(A) am Gasauslaß 5 für sich, da dies eine Herabsetzung der ursprünglichen Schallintensität um etwa das 20fache bedeutet.

Es versteht sich, daß das erfindungsgemäße Gasführungselement 1 auch zur Schalldämmung und -dämpfung am Einlaß 8a dieser Turbine 8 verwendet werden kann.

Um außerdem unerwünschte Strömungswiderstände auf der Saugseite oder Ausblasseite zu verringern, die bei Überschreitung bestimmter Grenzwerte zur Zerstörung der Turbine 8 führen können, werden vorteilhaft dann in den Strömungskanal 16 des Gasführungselementes 1 mitgedämpfte Strömungsbeschleuniger, wie Ventilatoren, Strahlpumpen, etc., eingesetzt und/oder die Querschnittsfläche des Gasführungselementes 16 gegenüber der Querschnittsfläche am Turbineneinlaß 8a vergrößert.

### Bezugszeichenliste:

- Gasführungselement: 1
- Gaseinlaß: 2
- Hauptkanal: 3
- Flanschverbindung: 4
- Gasauslaß: 5
- Traggestell: 6
- Trichter: 7
- Turbine: 8
- Turbineneinlaß: 8a
- Innenschlauchhülle: 9
- Innenwand: 9a
- Spirale: 10
- Außenschlauchhülle: 11
- Mineralfasern: 12
- Edelstahlwolle: 13
- Mittelschlauchhülle: 14
- Sprühvorrichtung: 15
- Führungskanal: 16
- Materialbahnen: 17, 18
- Stützkörper: 19
- Klemmkörper: 20
- Enden der Materialbahnen 17, 18: 21, 22
- Schenkelleisten des Klemmkörpers 20: 23, 24
- Öffnungsstelle des Klemmkörpers 20: 25
- Kanten der Schenkelleisten 23, 24: 26, 27
- Windung: W
- Windungsradius: r
- Absizissenachse: x
- Ordinatenachse: y
- Quadranten eines kartesischen Koordinatensystems: I, II, III, IV

## Patentansprüche

1. Gasführungselement mit schallweichen Wänden zum Dämmen und Dämpfen von sich in Hauptkanälen ausbreitenden Geräuschen, welches aus einer flexiblen Innenschlauchhülle mit einem Metallelement, einer Außenschlauchhülle und aus einer zwischen den Schlauchhüllen angeordneten, weichen sowie gleichfalls flexiblen Materialeinlage zusammengesetzt ist, **dadurch gekennzeichnet**, daß die Innenschlauchhülle (9) je nach mechanischer, chemischer oder kalorischer Belastung durch das zu führende Gas aus einem Textil, aus Metalldraht-, Glasfaser-, Synthetik-, Natur- Keramikgewebe, Non-woven oder einer weichen, dünnen Folie aus Polyurethan oder Polyamid oder Polytetrafluorethylen oder einer Kombination dieser Materialien besteht, welche an ihrer Außenseite mit massebehafteten Metallelementen (19, 20) verbunden ist, daß die Materialeinlage aus einem Haufwerk von Mineralfasern (12) und/oder Metallfasern (13) und/oder Spänen und/oder von Chips aus entropieelastischen Materialien hergestellt ist und daß das Gasführungselement (1) zwischen seinem Gaseinlaß (2) und seinem Gasauslaß (5) mindestens eine Windung (W) von 360° aufweist.

2. Gasführungselement nach Anspruch 1, **dadurch gekennzeichnet,** daß die massebehafteten Metallelemente aus Einzelringen bestehen, welche die Innenschlauchhülle umgreifen oder die aus Schlauchabschnitten bestehende Innenschlauchhülle zusammenhalten.

3. Gasführungselement nach Anspruch 1, **dadurch gekennzeichnet**, daß die massebehafteten Metallelemente (19, 20) von einer Metallspirale gebildet sind, welche die aus zwei spiralförmigen Materialbahnen bestehende Innenschlauchhülle an ihren sich überlappenden Seitenenden zusammenhält.

4. Gasführungselement nach Anspruch 1, **dadurch gekennzeichnet**, daß die massebehafteten Metallelemente aus regelmäßig an der Außenseite der Innenschlauchhülle befestigten Metallstücken bestehen.

5. Gasführungselement nach Anspruch 1, **dadurch gekennzeichnet**, daß die massebehafteten Metallelemente aus einer die Innenschlauchhülle (9) umgreifenden Metallspirale (19, 20) und aus einem diese wiederum umgreifenden sowie mit der gleichen Windungsform versehenen Rohr oder Schlauch bestehen, der mit der Metallspirale durch Klammern oder eingeklipste Bänder verbunden ist, wobei der Zwischenraum zwischen der Innenwandung des Rohres oder Schlauches und der Außenwandung der Innenschlauchhülle (9) mit Wasser, Hochtemperaturöl oder einer schmelzenden Metallegierung gefüllt ist.

6. Gasführungselement nach einem der Ansprüche 1 bis 5, **dadurch gekennzeichnet**, daß die Windung von einer kreisförmigen, einer archimedischen, einer hyperbolischen oder einer logarithmischen Spirale oder von einer elliptischen oder ovalen Schleife oder einer Knotenwindung oder von einer Schlangenlinie, insbesondere sinusförmigen Schlangenlinie, gebildet ist.

7. Gasführungselement nach einem der Ansprüche 1 bis 6, **dadurch gekennzeichnet,** daß das Gasführungselement (1) zwischen seinem Gaseinlaß (2) und seinem Gasauslaß (5) mit drei Windungen (W) versehen ist,

8. Gasführungselement nach einem der Ansprüche 1 bis 7, **dadurch gekennzeichnet,** daß die Windung (W) des Gasführungselementes (1) in Abhängigkeit von der Flexibilität der Materialien der Schlauchhüllen (9, 11, 14) mit einem möglichst engen Windungsradius (r) versehen ist.

9. Gasführungselement nach einem der Ansprüche 1 bis 8, **dadurch gekennzeichnet,** daß die Außenschlauchhülle (11) mit demselben Aufbau wie die Innenschlauchhülle (9) versehen ist.

10. Gasführungselement nach einem der Ansprüche 1 bis 8, **dadurch gekennzeichnet,** daß die Außenschlauchhülle (11) aus einem gas- und luftdichten Kunststoff, wie Polytetrafluorethylen (PTFE), Polyamid (PA), Polyester (PETP) oder aus einem ein- oder beidseitig mit diesen Kunststoffen beschichteten oder unbeschichteten Textil aus Draht- oder Glasfaser, Synthetik, Natur- oder Keramikgewebe, aus Non-woven oder einer Werkstoff-Kombination dieser Materialien besteht.

11. Gasführungselement nach einem der Ansprüche 1 bis 10, **dadurch gekennzeichnet,** daß zwischen der Innen- (9) und der Außenschlauchhülle (11) eine Mittelschlauchhülle (14) eingezogen ist.

12. Gasführungselement nach Anspruch 11, **dadurch gekennzeichnet,** daß die Mittelschlauchhülle (14) den gleichen Aufbau wie die Innenschlauchhülle (9) aufweist.

13. Gasführungselement nach einem der Ansprüche 1 bis 12, **dadurch gekennzeichnet,** daß die Innenschlauchhülle (9) aus einem feinen Edelstahl-Drahtgewebe, die Mittel- (14) und die Außenschlauchhülle (11) aus einem glasfaserverstärkten Gewebe und die Materialeinlage zwischen der Innenschlauchhülle (9) und Mittelschlauchhülle (14) aus Edelstahlwolle (13) und die Materialeinlage zwischen der Mittelschlauchhülle (14) und der Außenschlauchhülle (11) aus Mineralfaserwolle (12) hergestellt ist.

14. Gasführungselement nach einem der Ansprüche 1 bis 13, **dadurch gekennzeichnet**, daß die Schlauchhüllen (9, 11, 14) in an sich bekannter Weise aus spiralförmigen Materialbahnen (17, 18) bestehen, deren sich überlappende Seitenenden (21, 24) einen metallischen Stützkörper (19) umhüllen und gemeinsam mit diesem (19) von einem Klemmkörper (20) mit C-förmigem Querschnitt umgriffen sind, dessen an seiner Öffnungsseite (25) gegenüberliegende Schenkelleisten (23, 24) die Materialbahnen und deren sich überlappende Seitenenden (21, 22) an dieser Stelle klemmen.

15. Gasführungselement nach einem der Ansprüche 1 bis 14, **dadurch gekennzeichnet**, daß zur Herabsetzung der Druckverluste die Querschnittsfläche des Gasführungskanals (16) der Innenschlauchhülle (9) gegenüber der Querschnittsfläche des Gasführungskanals (3) vor dem Gaseinlaß (2) zu vergrößern ist.

16. Gasführungselement und einem der Ansprüche 1 bis 15, **dadurch gekennzeichnet**, daß die Innenschlauchhülle (9) mit einer Sprühvorrichtung (15) zum Einsprühen von Wasser in den Gasführungskanal (16) versehen ist.

17. Gasführungselement nach einem der Ansprüche 1 bis 16, **dadurch gekennzeichnet**, daß das Gasführungselement (1) in einem Traggestell (6) angeordnet und mit diesem verfahrbar ist.

## Claims

1. Gas conveying element with soft walls to insulate from and attenuate noises propagating in main channels, composed of a flexible inner hose sleeve with a metal element, an external hose sleeve, and a likewise flexible material insertion layer arranged between the hose sleeves, characterised in that the inner hose sleeve (9), depending on the mechanical, chemical, or calorific loading due to the gas being conducted, consists of a textile, of metal wire fabric, fibreglass fabric, synthetic fabric, natural fabric, ceramic fabric, nonwovens, or a soft thin film of polyurethane or polyamide of polytetrafluoroethylene or a combination of these materials, which is connected on its outside to weighted metal elements (19, 20), that the material insertion layer is made from a mass of mineral fibres (12) and/or metal fibres (13) and/or chips of entropy-elastic materials, and that the gas conveying element (1) features at least one winding (W) of 360° between its gas inlet (2) and its gas outlet (5).

2. Gas conveying element according to Claim 1, characterised in that the weighted metal elements consist of individual rings, which surround the inner hose sleeve or hold together the inner hose sleeve consisting of hose sections.

3. Gas conveying element according to Claim 1, characterised in that the weighted metal elements (19, 20) are formed from metal spirals, which hold together the inner hose sleeve, which consists of two spiral-shaped material strips, at the overlapping side ends.

4. Gas conveying element according to Claim 1, characterised in that the weighted metal elements consist of metal pieces secured in a regular fashion on the outside of the inner hose sleeve.

5. Gas conveying element according to Claim 1, characterised in that the weighted metal elements consist of metal spirals (19, 20) engaging around the inner hose sleeve (9) and of a tube or hose engaging around this in turn, and of the same winding shape, which is connected to the metal spirals by means of clamps or strips clipped in place, whereby the intermediate space between the inner wall of the tube or hose and the outer wall of the inner hose sleeve (9) is filled with water, high-temperature oil, or a meltable metal alloy.

6. Gas conveying element according to one of Claims 1 to 5, characterised in that the winding is formed from a circular, archimedean, hyperbolic, or logarithmic spiral, or by an elliptical or oval loop or a node winding or a snaking line, in particular a sinus-shaped snaking line.

7. Gas conveying element according to one of Claims 1 to 6, characterised in that the gas conveying element (1) is provided with three windings (W) between its gas inlet (2) and its gas outlet (5).

8. Gas conveying element according to one of Claims 1 to 7, characterised in that the winding (W) of the gas conveying element (1) is provided with as narrow a winding radius (r) as possible, as a function of the flexibility of the materials of the hose sleeves (9, 11, 14).

9. Gas conveying element according to one of Claims 1 to 8, characterised in that the outer hose sleeve (11) is provided with the same structure as the inner hose sleeve (9).

10. Gas conveying element according to one of Claims 1 to 8, characterised in that the outer hose sleeve (11) consists of a plastic, tight against gas and air, such as polytetrafluoroethylene (PTFE), polyamide (PA), polyester (PETP), or a textile of wire fibre or glass fibre, synthetic materials, natural or ceramic fabrics, nonwovens or a material combination of these materials, coated on one or both sides with these plastics or non-coated.

11. Gas conveying element according to one of Claims 1 to 10, characterised in that a middle hose sleeve (14) is drawn in between the inner (9) and outer hose sleeve (11).

12. Gas conveying element according to Claim 11, characterised in that the middle hose sleeve (14) features the same structure as the inner hose sleeve (9).

13. Gas conveying element according to one of Claims 1 to 12, characterised in that the inner hose sleeve (9) is manufactured from a fine stainless-steel wire fabric, the middle (14) and outer hose sleeve (11) of a glass-fibre reinforced fabric, and the material insertion layer between the inner hose sleeve (9) and the middle hose sleeve (14) is manufactured from stainless-steel wool (13), and the material insertion layer between the middle hose sleeve (14) and the outer hose sleeve (11) is manufactured from mineral fibre wool (12).

14. Gas conveying element according to one of Claims 1 to 13, characterised in that the hose sleeves (9, 11, 14) consist in an inherently known manner of spiral-shaped material strips (17, 18), of which the overlapping side ends (21, 24) encompass a metallic support body (19) and together with this (19) are encircled by a clamping body (20) with a C-shaped cross-section, on the opening side (25) of which mutually-opposed limb strips (23, 24) clamp the material strips and their overlapping side ends (21, 22) at this point.

15. Gas conveying element according to one of Claims 1 to 14, characterised in that, in order to reduce the pressure losses, the cross-sectional surface of the gas conveying channel (16) of the inner hose sleeve (9) is to be enlarged in relation to the cross-sectional surface of the gas conveying channel (3) before the gas inlet (2).

16. Gas conveying element according to one of Claims 1 to 15, characterised in that the inner hose sleeve (9) is provided with a spraying device (15) for spraying water into the gas conveying channel (16).

17. Gas conveying element according to one of Claims 1 to 16, characterised in that the gas conveying element (1) is arranged in a carrying frame (6) and is capable of being moved with this.

## Revendications

1. Elément convoyant un gaz avec des parois molles pour isoler et atténuer des sons se propageant dans un conduit principal, et se composant d'une gaine intérieure flexible en forme de tuyau avec un élément métallique, d'une gaine extérieure en forme de tuyau et d'une doublure intermédiaire agencée entre les gaines, molle et elle aussi flexible, caractérisé en ce que la gaine intérieure (9) se compose d'un textile, d'un tissu de fils métalliques, de fibres de verre, tissu synthétique, naturel ou céramique, d'un non tissé ou d'une feuille souple et mince en polyuréthanne ou polyamide ou polytétrafluoréthylène ou d'une combinaison de ces matières, en fonction de la contrainte mécanique, chimique ou calorique exercée par le gaz convoyé, qui est raccordée sur sa face extérieure à des éléments métalliques (19, 20) fixés à la masse, en ce que la doublure intermédiaire est fabriquée à partir d'une accumulation de fibres minérales (12) et/ou de fibres métalliques (13) et/ou de particules et/ou de confettis en matériaux à élasticité entropique, et en ce que l'élément (1) convoyant le gaz présente un enroulement (W) de 360° entre son admission de gaz (2) et sa sortie de gaz (5).

2. Elément convoyant un gaz selon la revendication 1, caractérisé en ce que les éléments métalliques fixés à la masse sont constitués d'anneaux individuels qui enserrent la gaine intérieure en forme de tuyau ou qui maintiennent la cohésion de la gaine intérieure se composant de tronçons de tuyaux.

3. Elément convoyant un gaz selon la revendication 1, caractérisé en ce que les éléments métalliques (19, 20) fixés à la masse sont constitués d'une spirale de métal qui maintient la cohésion de la gaine intérieure se composant de deux bandes de matière enroulées en spirale, au niveau de ses extrémités latérales portées en recouvrement.

4. Elément convoyant un gaz selon la revendication 1, caractérisé en ce que les éléments métalliques fixés à la masse sont constitués de morceaux de métal fixés régulièrement à la face extérieure de la gaine intérieure.

5. Elément convoyant un gaz selon la revendication 1, caractérisé en ce que les éléments métalliques fixés à la masse se composent d'une spirale de métal (19, 20) enserrant la gaine intérieure et d'un tube ou tuyau réenserrant celle-ci et présentant une forme de spires identique, qui est raccordé à la spirale de métal par des colliers de serrage ou des frettes clipsées, l'espace intermédiaire séparant la paroi intérieure du tube ou tuyau et la paroi extérieure de la gaine intérieure (9) étant rempli d'eau, d'huile haute température ou d'un alliage métallique fusible.

6. Elément convoyant un gaz selon l'une des revendications 1 à 5, caractérisé en ce que l'enroulement est formé par une spirale circulaire, d'Archimède, hyperbolique ou logarithmique ou par une boucle ellipsoïdale ou ovale ou un enroulement nodal ou par une ligne sinueuse en particulier sinusoïdale.

7. Elément convoyant un gaz selon l'une des revendications 1 à 6, caractérisé en ce qu'entre son admission de gaz (2) et sa sortie de gaz (5), l'élément (1) convoyant un gaz présente trois enroulements (W).

8. Elément convoyant un gaz selon l'une des revendications 1 à 7, caractérisé en ce que l'enroulement (W) de l'élément (1) convoyant un gaz présente un rayon d'enroulement (r) le plus étroit possible en fonction de la flexibilité des matériaux des gaines (9, 11, 14).

9. Elément convoyant un gaz selon l'une des revendications 1 à 8, caractérisé en ce que la gaine extérieure (11) en forme de tuyau est de même structure que la gaine intérieure (9) en forme de tuyau.

10. Elément convoyant un gaz selon l'une des revendications 1 à 8, caractérisé en ce que la gaine extérieure (11) est faite d'une matière plastique étanche aux gaz et à l'air comme le polytétrafluoréthylène (PTFE), le polyamide (PA), le polyester (PETP) ou d'un textile revêtu de ces matières plastiques sur l'une de ses faces ou ses deux faces ou non revêtu, à base d'un tissu de fils, de fibres de verre, synthétique, naturel ou céramique, d'un non tissé ou d'une combinaison technique de ces matériaux.

11. Elément convoyant un gaz selon l'une des revendications 1 à 10, caractérisé en ce qu'une gaine centrale (14) est insérée entre les gaines intérieure (9) et extérieure (11) .

12. Elément convoyant un gaz selon la revendication 11, caractérisé en ce que la gaine centrale (14) présente la même structure que la gaine intérieure (9).

13. Elément convoyant un gaz selon l'une des revendications 1 à 12, caractérisé en ce que la gaine intérieure (9) se compose d'un fin tissu de fil d'acier spécial, les gaines centrale (14) et extérieure (11), d'un tissu renforcé de fibres de verre, et la doublure intermédiaire séparant la gaine intérieure (9) et la gaine centrale (14), de laine d'acier spécial (13), et la doublure intermédiaire séparant la gaine centrale (14) et la gaine extérieure (11), de laine de fibres minérales (12).

14. Elément convoyant un gaz selon l'une des revendications 1 à 13, caractérisé en ce que les gaines (9, 11, 14) se composent de la manière connue de bandes de matière (17, 18) en forme de spirales, dont les extrémités latérales portées en recouvrement (21, 24) enveloppent une structure d'appui (19) métallique et sont enserrées avec cette dernière (19) par une structure de serrage (20) de section transversale en forme de C dont les côtés (23, 24) opposés à sa face ouverte (25) serrent à cet endroit les bandes de matière et leurs extrémités latérales (21, 22) portées en recouvrement.

15. Elément convoyant un gaz selon l'une des revendications 1 à 14, caractérisé en ce que pour réduire les pertes de charge, l'aire de section transversale du passage (16) de convoyage de gaz de la gaine intérieure (9) doit être agrandie par rapport à l'aire de section transversale du passage (3) de convoyage de gaz en amont de l'admission de gaz (2).

16. Elément convoyant un gaz selon l'une des revendications 1 à 15, caractérisé en ce que la gaine intérieure (9) est équipée d'un dispositif de pulvérisation (15) pulvérisant de l'eau dans le passage (16) de convoyage de gaz.

17. Elément convoyant un gaz selon l'une des revendications 1 à 16, caractérisé en ce que l'élément (1) convoyant le gaz est placé dans un châssis de support (6) et déplaçable avec ce dernier.
